# EUROPEAN PATENT APPLICATION

(11) **EP 4 625 742 A1**
(43) Date of publication of application: **01.10.2025**
(21) Application number: 23894302.1
(22) Date of filing: 17.10.2023
(51) Int. Cl.: H02J 3/14, B60L 53/66, B60L 55/00, H02H 3/02, H02H 3/05, H02J 3/32

(54) **POWER SYSTEM, STATION, AND IN-VEHICLE CHARGER**

(30) Priority: 22.11.2022 JP 2022186668
(71) Applicant: TOYOTA JIDOSHA KABUSHIKI KAISHA, Toyota-shi Aichi 471-8571 (JP)
(72) Inventor: FUKUHARA, Renshiro, Nisshin-city, Aichi 4700111 (JP); YOSHIZUMI, Akira, Toyota-shi, Aichi 471-8571 (JP); KIMURA, Kazutaka, Toyota-shi, Aichi 471-8571 (JP)
(74) Representative: Cabinet Beau de Loménie
(86) International application number: PCT/JP2023/037580
(87) International publication number: WO 2024/111290

(57) **Abstract**

A power system is electrically connected to a power grid, and includes a stand having a master station transmitting a proper setting value and an in-vehicle charger cooperative with the power grid and including a slave station that receives the proper setting value from the master station. As a result, even when the in-vehicle charger is connected to a stand having a different proper setting value, it is possible to provide a power station, a station and an in-vehicle charger that can secure the consistency with respect to the proper setting value.

## Description

### TECHINIACL FIELD

The present disclosure relates to a power system, a station, and an in-vehicle charger.

### BACKGROUND ART

When renewable energy is introduced, an amount of power generation fluctuates due to an influence of weather conditions, and a power grid may become unstable. Thus, it is gathering attention to use an in-vehicle charger mounted on a vehicle as a distributed power supply and to operate the in-vehicle charger as a part of a virtual power plant (VPP). Among systems of the VPP, the Vehicle-to-grid (V2G) system bidirectionally controls charging from a power grid to the in-vehicle charger and power supply from the in-vehicle charger to the power grid.

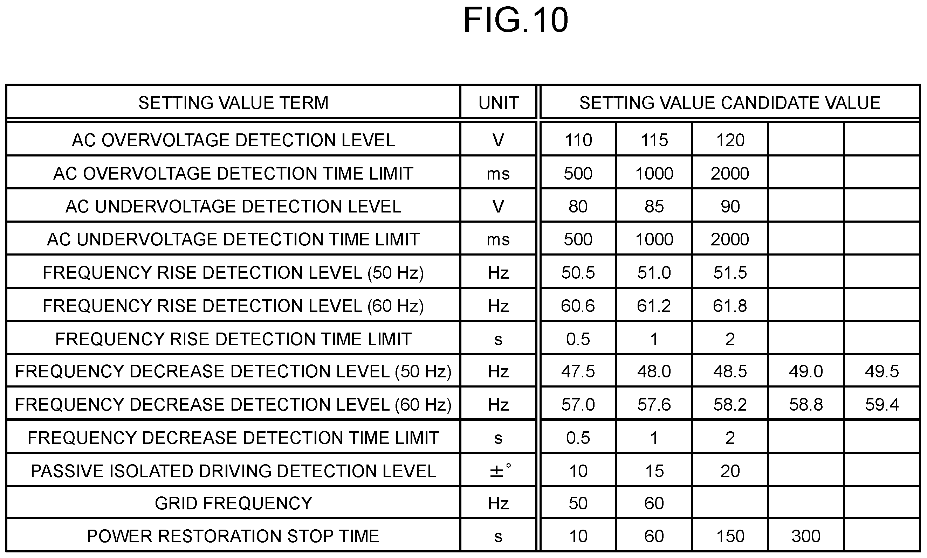

When an excess or deficiency of voltage, an excess or deficiency of a frequency, an accident of a power grid, or the like is generated when the distributed power supply is interconnected to the power grid, it is necessary to disconnect the distributed power supply from the power grid and to stop the power supply to the power grid. A threshold of a voltage or a frequency for determining the stop of the supply, time until the disconnection, or the like is referred to as a setting value, and the setting value varies depending on a power company or a region. For stability and safety of the power grid, the distributed power supply interconnected to the power grid is required to set a proper setting value demanded by the power company or the like, and to operate according to the setting value. As the setting value to be set to the distributed power supply, there are a several candidate values for each item, and a value instructed by the power company is set from these candidate values. FIG. 10 is a view illustrating an example of items and candidate values of setting values. FIG. 10 is an example, and is not a limitation.

Patent Document 1 discloses a technique of transmitting a setting value or a disconnection instruction to a protective relay provided in a power conditioner of a distributed power supply connected to a power grid in order to smoothly set the setting value and manage the setting value in the distributed power supply. In Patent Document 1, the distributed power supply is a private power generation power supply such as solar power generation or wind power generation, the power conditioner is a DC/AC converter that converts DC power generated by the distributed power supply into AC power, and the protective relay is a relay that disconnects the distributed power supply from the grid. The distributed power supply and the power conditioner are installed in a house of a customer.

### PRIOR ART DOCUMENT

### PATENT DOCUMENT

Patent Document 1: Japanese Laid-open Patent Publication No. 2012-182904

### SUMMARY OF THE INVENTION

### PROBLEM TO BE RESOLVED BY THE INVENTION

However, in V2G, when a vehicle moves, an in-vehicle charger may be connected to a V2G station having a different setting value. As a result, there is a case where the setting value of the V2G station and a setting value set in the in-vehicle charger are different from each other, and there is a case where consistency of the setting values is not secured.

The present disclosure has been made in view of the above, and an object thereof is to provide a power system, a station, and an in-vehicle charger capable of securing consistency of setting values even in a case where the in-vehicle charger is connected to the station having a different setting value.

### MEANS FOR SOLVING THE PROBLEM

A power system according to the present disclosure includes: a station electrically connected to a power grid and including a master station that transmits a proper setting value; and an in-vehicle charger that is interconnected with the power grid and that includes a slave station that receives the proper setting value from the master station.

A station according to the present disclosure includes: a master station that is electrically connected to a power grid and that transmits a proper setting value to a slave station included in an in-vehicle charger that is interconnected with the power grid.

An in-vehicle charger according to the present disclosure includes: a slave station that is interconnected with a power grid and that receives a proper setting value from a master station included in a station electrically connected to the power grid.

### EFFECT OF THE INVENTION

According to the present disclosure, it is possible to realize a power system, a station, and an in-vehicle charger capable of securing consistency of setting values even in a case where the in-vehicle charger is connected to the station having a different setting value.

### BRIEF DESCRIPTION OF THE DRAWINGS

FIG. 1 is a schematic configuration diagram of a power system according to a first embodiment.
FIG. 2 is a schematic configuration diagram of a V2G station according to the first embodiment.
FIG. 3 is a schematic configuration diagram of an in-vehicle charger according to the first embodiment.
FIG. 4 is a flowchart illustrating an example of processing executed by the V2G station according to the first embodiment.
FIG. 5 is a flowchart illustrating an example of processing executed by the in-vehicle charger according to the first embodiment.
FIG. 6 is a view illustrating a state in which a disconnection relay is disconnected.
FIG. 7 is a schematic configuration diagram of a power system according to a third embodiment.
FIG. 8 is a flowchart illustrating an example of processing executed by an in-vehicle charger according to the third embodiment.
FIG. 9 is a schematic configuration diagram of a power system according to a first modified example.
FIG. 10 is a view illustrating an example of items and candidate values of setting values.

### EMBODIMENTS TO CARRY OUT THE PRESENT INVENTION

A power system according to an embodiment of the present disclosure will be described with reference to the drawings. Note that components in the following embodiment include what can be easily replaced by those skilled in the art or what is substantially the same.

### [First embodiment]

### (Power system)

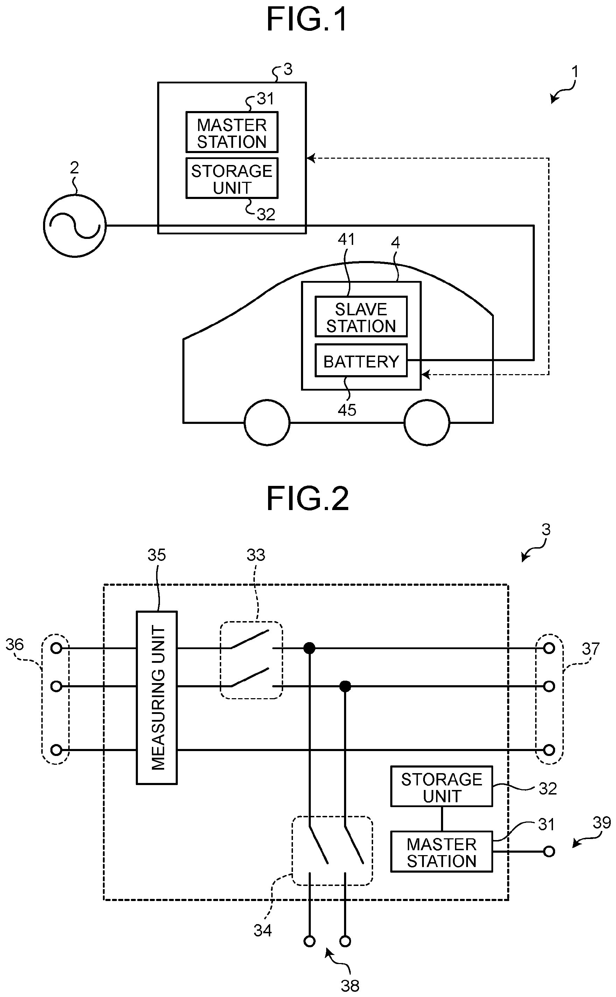

FIG. 1 is a schematic configuration diagram of a power system according to a first embodiment. A power system 1 includes a V2G station 3 electrically connected to a power grid 2, and an in-vehicle charger 4 that can be interconnected with the power grid **2.**

### (V2G station)

FIG. 2 is a schematic configuration diagram of the V2G station according to the first embodiment. The V2G station 3 includes a master station 31, a storage unit 32, a disconnection relay 33, a V2H relay 34, a measuring unit 35, a grid connection unit 36, a vehicle connection unit 37, a household load connection unit 38, and a slave station connection unit 39. The V2G station 3 is connected to, for example, a single-phase three-wire power grid 2, but may be connected to a three-phase three-wire power grid 2.

The master station 31 transmits a proper setting value to a slave station 41. In addition, the master station 31 acquires a set setting value set in the in-vehicle charger 4 from the slave station 41, and transmits, in a case where the proper setting value and the set setting value are equal to each other, a permission signal that gives permission for interconnection with the power grid 2 to the slave station 41.

The storage unit 32 is realized, for example, by recording media such as an erasable programmable ROM (EPROM), a hard disk drive (HDD), and a removable medium. Examples of the removable medium include a universal serial bus (USB) memory, and disc recording media such as a compact disc (CD), a digital versatile disc (DVD), and a Blu-ray (registered trademark) disc (BD).

The storage unit 32 can store an operating system (OS), various programs, various tables, various databases, and the like. In addition, the storage unit 32 stores a proper setting value that varies depending on a power company or region.

The disconnection relay 33 disconnects electrical connection between the in-vehicle charger 4 and the power grid 2.

The V2H relay 34 discharges electricity from the in-vehicle charger 4 to a home via the V2G station 3 installed in the home in a case where power is not supplied from the power grid 2 to the home due to a power failure or the like. As a result, power stored in a battery 45 of the in-vehicle charger 4 can be supplied to a load of a household.

The measuring unit 35 measures power supplied from the power grid 2 to the in-vehicle charger 4, and an electricity rate can be charged according to the measured power. Furthermore, the measuring unit 35 can measure the power supplied from the in-vehicle charger 4 to the power grid 2 and give a reward to the user according to the measured power. The measuring unit 35 may be provided in the in-vehicle charger 4.

The grid connection unit 36 is electrically connected to the single-phase three-wire power grid 2.

The vehicle connection unit 37 is electrically connected to the in-vehicle charger 4.

The household load connection unit 38 is electrically connected to a household load.

The slave station connection unit 39 can communicate with the slave station 41 in a wired or wireless manner, and transmits and receives various signals.

### (In-vehicle charger)

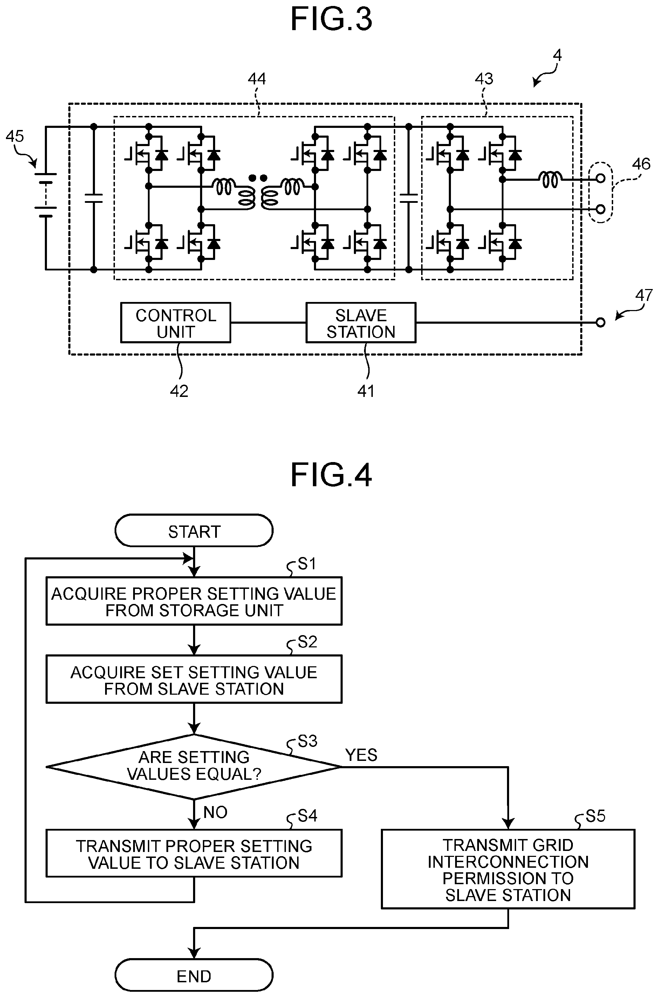

FIG. 3 is a schematic configuration diagram of the in-vehicle charger according to the first embodiment. The in-vehicle charger 4 includes the slave station 41, a control unit 42, a DC/AC converter 43, an isolated DC/DC converter 44, the battery 45, a V2G station connection unit 46, and a master station connection unit 47. In addition, the in-vehicle charger 4 may include an AC filter that removes noise, a measuring unit that measures power, or a disconnection relay that disconnects the electrical connection between the in-vehicle charger 4 and the power grid 2 in a subsequent stage of the DC/AC converter 43 as viewed from a side of the battery 45.

The slave station 41 receives the proper setting value from the master station 31. In a case of detecting abnormality on the basis of the proper setting value, the slave station 41 transmits an abnormality signal to the master station 31.

The control unit 42 controls each unit of the in-vehicle charger 4. The control unit 42 transmits a gate signal to switching elements of the DC/AC converter 43 and the isolated DC/DC converter 44, and controls operations of the DC/AC converter 43 and the isolated DC/DC converter 44.

The DC/AC converter 43 converts AC and DC of a frequency corresponding to the power grid 2. The DC/AC converter 43 has a configuration capable of bidirectionally converting power since upper and lower arms are switching elements.

The isolated DC/DC converter 44 converts a DC voltage. The isolated DC/DC converter 44 is a dual active bridge (DAB) circuit and can perform bidirectional power conversion. In addition, the isolated DC/DC converter 44 disconnects electrical connection between the battery 45 and the V2G station 3.

The battery 45 stores or discharges electricity under the control of the control unit 42.

The V2G station connection unit 46 is electrically connected to the V2G station 3.

The master station connection unit 47 can communicate with the master station 31 in a wired or wireless manner, and transmits and receives various signals.

### (Processing executed by the V2G station)

Next, an example of a processing procedure executed by the V2G station according to the first embodiment will be described with reference to FIG. 4. FIG. 4 is a flowchart illustrating an example of processing executed by the V2G station according to the first embodiment.

As illustrated in FIG. 4, the master station 31 acquires, from the storage unit 32, a proper setting value that varies depending on a power company or region (Step S1).

Subsequently, the master station 31 acquires a set setting value set in the in-vehicle charger 4 from the slave station 41 (Step S2).

Then, the master station 31 determines whether the proper setting value and the set setting value are equal to each other (Step S3).

In a case where the master station 31 determines that the proper setting value and the set setting value are different (Step S3: No), the master station 31 transmits the proper setting value to the slave station 41 (Step S4). Subsequently, the processing returns to Step S1 and is repeated until it is determined that the proper setting value and the set setting value are equal to each other.

On the other hand, in a case where the master station 31 determines that the proper setting value and the set setting value are equal to each other (Step S3: Yes), the master station 31 transmits, to the slave station 41, a permission signal that gives permission for interconnection with the power grid 2 (Step S5), and ends the series of processing.

Through the above operation, the V2G station 3 sets the proper setting value for the slave station 41 of the in-vehicle charger 4.

### (Processing executed by the in-vehicle charger)

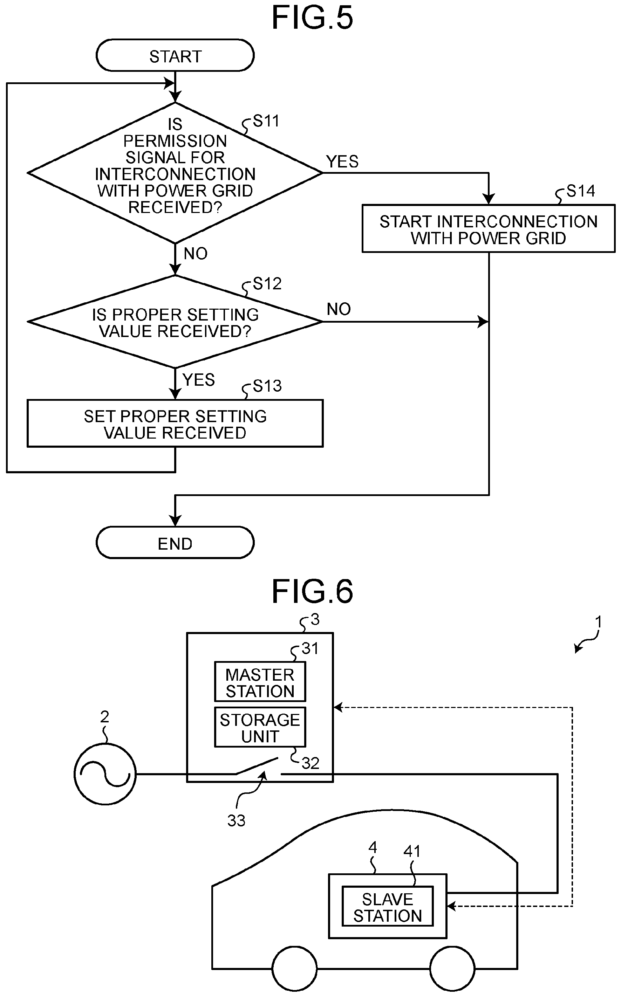

Next, an example of a processing procedure executed by the in-vehicle charger according to the first embodiment will be described with reference to FIG. 5. FIG. 5 is a flowchart illustrating an example of processing executed by the in-vehicle charger according to the first embodiment.

As illustrated in FIG. 5, the slave station 41 determines whether the permission signal that gives permission for interconnection with the power grid 2 is received from the master station 31 (Step S11).

In a case where the slave station 41 determines that the permission signal is not received (Step S11: No), the slave station 41 determines whether the proper setting value is received from the master station 31 (Step S12).

In a case where the slave station 41 determines that the proper setting value is received from the master station 31 (Step S12: Yes), the slave station 41 sets the received proper setting value as the set setting value of the in-vehicle charger 4 (Step S13).

In a case where the slave station 41 determines in Step S11 that the permission signal is received (Step S11: Yes), the in-vehicle charger 4 starts the interconnection with the power grid 2 (Step S14), charges or discharges the battery 45, and then ends the series of processing.

In a case where the slave station 41 determines in Step S12 that the proper setting value is not received from the master station 31 (Step S12: No), the series of processing is ended.

Through the above processing, the suitable setting value can be set to the in-vehicle charger 4. Furthermore, since the interconnection with the power grid 2 is started only in a case where the permission signal is received from the master station 31, that is, a case where the proper setting value is set for the in-vehicle charger 4, safety can be secured.

According to the first embodiment described above, even in a case where the in-vehicle charger 4 is connected to the V2G station 3 having a different setting value, consistency of the setting values can be secured. In addition, since the V2G station 3 includes no DC/AC converter, the V2G station 3 can be downsized.

### (Function of the disconnection relay)

FIG. 6 is a view illustrating a state in which the disconnection relay is disconnected. In a case of detecting abnormality on the basis of the proper setting value, the slave station 41 transmits an abnormality signal to the master station 31. Then, in a case of receiving the abnormality signal from the slave station 41, the master station 31 disconnects the electrical connection between the in-vehicle charger 4 and the power grid 2 by the disconnection relay 33. Since the disconnection relay 33 of the V2G station 3 is disconnected, it possible to prevent the power grid 2 and the in-vehicle charger 4 from being interconnected in a state in which the setting values are not consistent.

Furthermore, in a case where communication between the V2G station 3 and the in-vehicle charger 4 is not established for a predetermined time or more, the master station 31 or the slave station 41 may disconnect the electrical connection between the in-vehicle charger 4 and the power grid 2 by the disconnection relay 33. As a result, it is possible to enhance safety of a case where communication between the V2G station 3 and the in-vehicle charger 4 is not established.

### [Second embodiment]

A power system according to a second embodiment may have the same configuration as that of the first embodiment, and thus a description thereof will be omitted. In the second embodiment, a master station 31 acquires a voltage, a frequency, or the like from a slave station 41. Then, in a case where the master station 31 detects abnormality of the acquired voltage, frequency, or the like on the basis of a proper setting value, electrical connection between an in-vehicle charger 4 and a power grid 2 is disconnected by a disconnection relay 33. In such a manner, it may be determined on a side of a V2G station 3 whether to disconnect the electrical connection between the in-vehicle charger 4 and the power grid 2 by the disconnection relay 33.

### [Third embodiment]

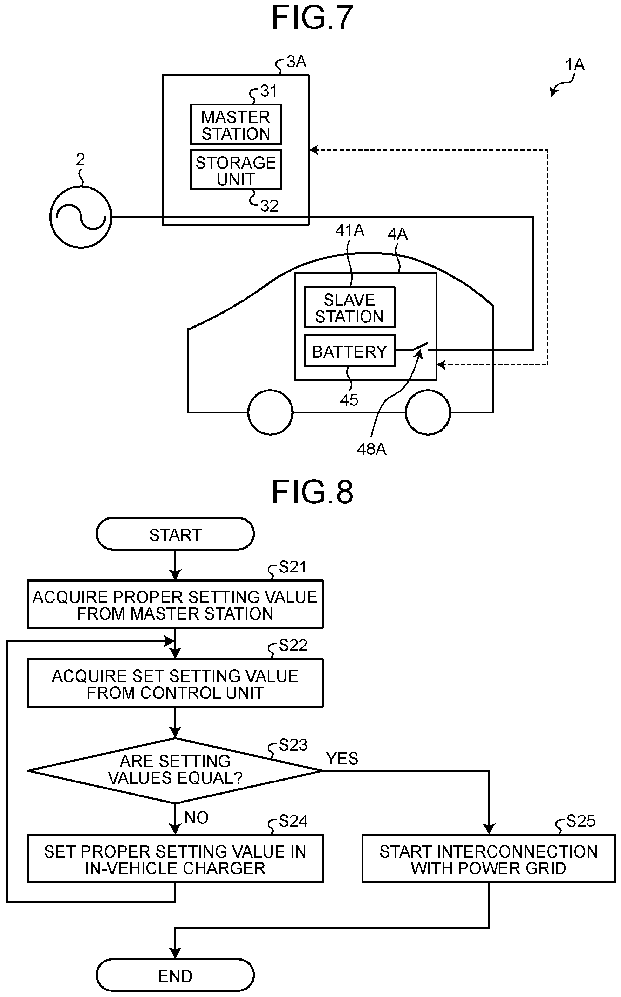

FIG. 7 is a schematic configuration diagram of a power system according to a third embodiment. An in-vehicle charger 4A of a power system 1A includes a disconnection relay 48A. On the other hand, a V2G station 3A includes no disconnection relay.

### (Processing executed by the in-vehicle charger)

Next, an example of a processing procedure executed by the in-vehicle charger according to the third embodiment will be described with reference to FIG. 8. FIG. 8 is a flowchart illustrating an example of processing executed by the in-vehicle charger according to the third embodiment.

As illustrated in FIG. 8, a slave station 41A acquires, from a master station 31, a proper setting value that varies depending on a power company or region (Step S21).

Furthermore, the slave station 41A acquires, from a control unit 42, a set setting value set in an in-vehicle charger 4A (Step S22).

Then, the slave station 41A determines whether the proper setting value and the set setting value are equal to each other (Step S23).

In a case where the slave station 41A determines that the proper setting value and the set setting value are different (Step S23: No), the slave station 41A sets the received proper setting value to the set setting value of the in-vehicle charger 4A (Step S24). Subsequently, the processing returns to Step S22 and is repeated until it is determined that the proper setting value and the set setting value are equal.

On the other hand, in a case where the slave station 41A determines that the proper setting value and the set setting value are equal to each other (Step S23: Yes), the in-vehicle charger 4A starts interconnection with a power grid 2 (Step S25), charges or discharges a battery 45, and then ends the series of processing.

According to the third embodiment described above, even in a case where the in-vehicle charger 4A is connected to the V2G station 3A having a different setting value, consistency of the setting values can be secured. In addition, since the V2G station 3A includes no DC/AC converter, the V2G station 3A can be downsized.

### (Function of the disconnection relay)

In a case where the slave station 41A detects abnormality on the basis of the proper setting value, the disconnection relay 48A disconnects electrical connection between the in-vehicle charger 4A and the power grid 2. Since the disconnection relay 48A of the in-vehicle charger 4A is disconnected, it possible to prevent the power grid 2 and the in-vehicle charger 4A from being interconnected in a state in which the setting values are not consistent. As described above, the in-vehicle charger 4A may include the disconnection relay 48A, and it may be determined on a side of the in-vehicle charger 4A whether to disconnect the electrical connection between the in-vehicle charger 4A and the power grid 2 by the disconnection relay 48A.

Note that it may be determined on a side of the V2G station 3A whether to disconnect the electrical connection between the in-vehicle charger 4A and the power grid 2 by the disconnection relay 48A. Specifically, the master station 31 acquires a voltage, a frequency, or the like from the slave station 41A. Furthermore, in a case of determining that the acquired voltage, frequency, or the like is abnormal on the basis of the proper setting value, the master station 31 transmits an abnormality signal to the slave station 41A. Then, in a case of receiving the abnormality signal from the master station 31, the slave station 41A disconnects the electrical connection between the in-vehicle charger 4A and the power grid 2 by the disconnection relay 48A.

Furthermore, in a case where communication between the V2G station 3A and the in-vehicle charger 4A is not established for a predetermined time or more, the master station 31 or the slave station 41A may disconnect the electrical connection between the in-vehicle charger 4A and the power grid 2 by the disconnection relay 48A. As a result, it is possible to enhance safety of a case where communication between the V2G station 3A and the in-vehicle charger 4A is not established.

### (First modified example)

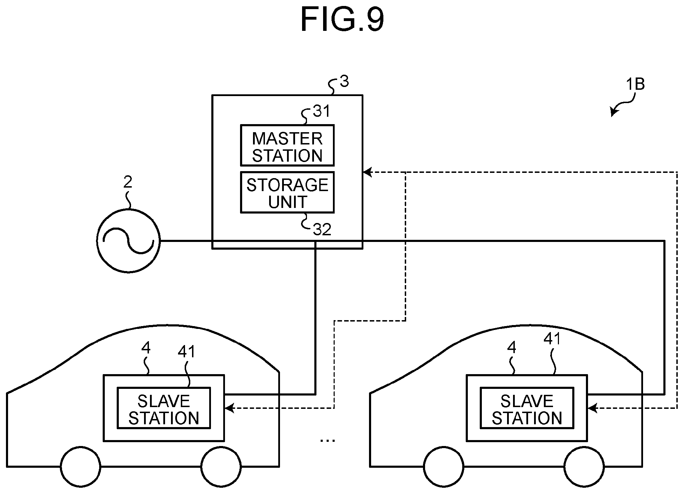

FIG. 9 is a schematic configuration diagram of a power system according to a first modified example. As illustrated in FIG. 9, a plurality of in-vehicle chargers 4 is connected to a V2G station 3 of a power system 1B. In this case, the V2G station 3 performs communication with each of the in-vehicle chargers 4, and performs processing of setting a proper setting value. As a result, a suitable setting value can be set to all the in-vehicle chargers 4.

Although the disclosure has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

### EXPLANATION OF SIGNS

1, 1A, 1B: POWER SYSTEM
2: POWER GRID
3, 3A: V2G STATION
4, 4A: IN-VEHICLE CHARGER
31: MASTER STATION
32: STORAGE UNIT
33, 48A: DISCONNECTION RELAY
34: V2H RELAY
35: MEASURING UNIT
36: GRID CONNECTION UNIT
37: VEHICLE CONNECTION UNIT
38: HOUSEHOLD LOAD CONNECTION UNIT
39: SLAVE STATION CONNECTION UNIT
41, 41A: SLAVE STATION
42: CONTROL UNIT
43: DC/AC CONVERTER
44: ISOLATED DC/DC CONVERTER
45: BATTERY
46: V2G STATION CONNECTION UNIT
47: MASTER STATION CONNECTION UNIT

## Claims

1. A power system comprising:
a station electrically connected to a power grid and including a master station that transmits a proper setting value; and
an in-vehicle charger that is interconnected with the power grid and that includes a slave station that receives the proper setting value from the master station.

2. The power system according to claim 1, wherein
the master station
acquires a set setting value set in the in-vehicle charger from the slave station, and
transmits, in a case where the proper setting value and the set setting value are equal to each other, a permission signal that gives permission for interconnection with the power grid to the slave station.

3. The power system according to claim 1, wherein
the station or the in-vehicle charger includes
a disconnection relay that disconnects electrical connection between the in-vehicle charger and the power **grid.**

4. The power system according to claim 3, wherein
the master station or the slave station
disconnects, in a case where communication between the station and the in-vehicle charger is not established for a predetermined time or more, the electrical connection between the in-vehicle charger and the power grid by the disconnection relay.

5. The power system according to claim 3, wherein
the master station includes the disconnection relay, and
the slave station transmits an abnormality signal to the master station in a case of detecting abnormality on a basis of the proper setting value, and
the master station disconnects the electrical connection between the in-vehicle charger and the power grid by the disconnection relay in a case of receiving the abnormality signal.

6. The power system according to claim 3, wherein
the master station includes the disconnection relay, and
the master station disconnects, in a case of detecting abnormality on a basis of the proper setting value, the electrical connection between the in-vehicle charger and the power grid by the disconnection relay.

7. The power system according to claim 3, wherein
the slave station includes the disconnection relay, and
the slave station disconnects, in a case of detecting abnormality on a basis of the proper setting value, the electrical connection between the in-vehicle charger and the power grid by the disconnection relay.

8. The power system according to claim 1, wherein the station includes a storage unit that stores the proper setting value.

9. The power system according to claim 1, wherein
the in-vehicle charger
includes a DC/AC converter that converts AC between DC.

10. A station comprising: a master station that is electrically connected to a power grid and that transmits a proper setting value to a slave station included in an in-vehicle charger that is interconnected with the power grid.

11. The station according to claim 10, further comprising a storage unit that stores the proper setting value.

12. An in-vehicle charger comprising: a slave station that is interconnected with a power grid and that receives a proper setting value from a master station included in a station electrically connected to the power grid.

13. The in-vehicle charger according to claim 12, further comprising a DC/AC converter that converts AC between DC.
